Europäisches Patentamt

European Patent Office

Office européen des brevets

(19)

(11) **EP 0 790 002 B1**

(12) **FASCICULE DE BREVET EUROPEEN**

(45) Date de publication et mention
de la délivrance du brevet:
**12.11.2003 Bulletin 2003/46**

(21) Numéro de dépôt: **97430002.2**

(22) Date de dépôt: **17.01.1997**

(51) Int Cl.[7]: **A01N 61/00**, A01N 57/14
// (A01N61/00, 61:00, 61:00),
(A01N57/14, 57:14, 47:34,
37:46)

(54) **Composition et procédé pour le traitement des cultures contre les complexes parasitaires du sol**

Zusammensetzung und Verfahren zur Behandlung von Kulturen gegen Bodenparasitärkomplexe

Composition and process for the treatment of cultures against parasitecomplexes of soil

(84) Etats contractants désignés:
**DE ES FR GB IT NL**

(30) Priorité: **17.01.1996 FR 9600687**

(43) Date de publication de la demande:
**20.08.1997 Bulletin 1997/34**

(73) Titulaire: **Clause Tézier**
**91221 Brétigny sur Orge Cédex (FR)**

(72) Inventeur: **Gaudillat, Michel**
**83000 Toulon (FR)**

(74) Mandataire: **Breese, Pierre et al**
**Breese - Majerowicz - Simonnot**
**3, avenue de l'Opéra**
**75001 Paris (FR)**

(56) Documents cités:
**EP-A- 0 274 839**    **WO-A-88/06841**

• **CHEMICAL ABSTRACTS, vol. 110, no. 9, 27 février 1989 Columbus, Ohio, US; abstract no. 71106, XP002015497 & CN 8 600 095 A (BEIJING AGRICULTURAL UNIVERSITY) 7 octobre 1987**
• **CHEMICAL ABSTRACTS, vol. 87, no. 25, 19 décembre 1977 Columbus, Ohio, US; abstract no. 195271, M.MAKES: "Test results of fungicides and seed dressings in Czechoslovakia in 1976" XP002015498 & AGROCHEMIA, vol. 17, no. 5, 1977, pages 143-147,**

• **CHEMICAL ABSTRACTS, vol. 91, no. 21, 19 novembre 1979 Columbus, Ohio, US; abstract no. 169923, XP002015499 & PL 102 438 A (INSTYTUT PRZEMYSLU ORGANICZNEGO) 15 mai 1979**
• **C.TOMLIN: "The Pesticide Manual" 1995 , THE BRITISH CROP PROTECTION COUNCIL / THE ROYAL SOCIETY OF CHEMISTRY , FARNHAM, GB XP002015496 * page 987-988: "thiophanate-methyl" , "USES", "MIXTURES" & page 518: "folpet", "USES" & page 145, "captan", "USES" * * page 992-993: "tolcofos-methyl", "USES", "MIXTURES" & page 989-990: "thiram", "USES" * * page 660-661: "metalaxyl", "USES", "MIXTURES" & page 444: "fenpiclonil", "USES" & page 972-973: "thiabendazole", "USES" * * page 279-280: "dazomet", "USES" * * page 511-512: "flusulfamide", "USES" ***
• **CHEMICAL ABSTRACTS, vol. 118, no. 23, 7 juin 1993 Columbus, Ohio, US; abstract no. 228110, J.ROD: "Use of benomyl and cymoxanil in vegetable cultivation" XP002015500 & AGROCHEMICA, vol. 32, no. 11, 1992, pages 270-272,**
• **CHEMICAL ABSTRACTS, vol. 116, no. 19, 11 mai 1992 Columbus, Ohio, US; abstract no. 189527, A.A.KHAN ET AL.: "Integrating matriconditioning and fungicidal treatment of table beet seed to improve stand establishment and yield" XP002015501 & CROP.SCI., vol. 32, no. 1, 1992, pages 231-237,**

Remarques:
Le dossier contient des informations techniques présentées postérieurement au dépôt de la demande et ne figurant pas dans le présent fascicule.

**Description**

La présente invention a pour objet une composition et un procédé pour le traitement des cultures en particulier des cultures légumières, contre les complexes parasitaires du sol.

Lorsque la semence ou le matériel de propagation est déposé dans le sol, il est attaqué, si les conditions s'y prêtent, par des champignons qui sont présents naturellement dans le sol. Même si la graine est saine, ces champignons peuvent attaquer la plantule et réduire les peuplements de façon appréciable. Les dégâts provoqués peuvent atteindre 80 % de destruction.

Ces champignons sont en nombre limité et appartiennent à des familles différentes. Les principaux sont le Fusarium et Thielavopsis appartenant à la famille des Ascomycètes, le Rhizoctonia appartenant à la famille des Basidiomycètes et le Pythium appartenant à la famille des Oomycètes. Tous ces champignons ont une vie saprophytique, c'est-à-dire qu'ils peuvent se maintenir plusieurs années dans le sol en l'absence de la plante hôte ou même se développer sur des débris végétaux. De plus, ils attaquent de préférence des tissus jeunes, sont peu spécialisés et ont un développement rapide en conditions favorables. Toutes ces propriétés les rendent très redoutables pour de nombreuses cultures. On a bien essayé de les maîtriser avec des fongicides notamment en enrobages de semences mais les combinaisons sont spécifiques et les résultats décevants.

L'abrégé 71106 du Chemical Abstracts (1989, vol. 110) décrit des compositions utilisées pour l'enrobage des semences afin de les préserver des espèces pathogènes. Ce document décrit, plus particulièrement, une composition comprenant du metalaxyl, de l'acephate, du carbendazime, du carbofurane, du thiram et du quintozene. Une composition comprenant du thiabendazole, du bendiocarb, du captan et du fosetyl est également décrite page 973 du Pesticide Manual (1995, The British Crop Protection Council/ The Royal Society of Chemistry).

On a maintenant découvert qu'on peut obtenir une maîtrise de ces maladies bien supérieure par la combinaison de trois fongicides et d'un insecticide, cette combinaison présentant un effet synergique.

Les cultures pour lesquelles l'invention peut être appliquée sont notamment les cultures du haricot, de la laitue, de la chicorée, de la carotte, de la courge, du chou, du chou-fleur, du radis, du pois, de la fève, de l'oignon, de la betterave, du maïs, du blé et du colza.

L'invention a donc pour objet une composition pour le traitement des plantes, en particulier des cultures et plus spécialement des cultures légumières, contre les complexes parasitaires du sol, caractérisée en ce qu'elles contiennent à la fois :

- au moins une matière active anti-*Fusarium* A,
- au moins une matière active anti-*Rhizoctonia* B,
- au moins une matière active anti-*Pythium* C
- et au moins un insecticide D actif contre les insectes du sol.

dans des proportions pondérales telles que le rapport A/B est compris entre 0,1 à 20 et de préférence de 0,4 à 8 et le rapport A/C est compris entre 0,04 et 20 et de préférence entre 0,2 et 8.

Dans la suite, les matières actives seront désignées par leur nom commun tel que répertorié dans Index Phytosanitaire 1996 ACTA. 32 ème édition.

Comme matière active anti-*Fusarium* A utilisable selon l'invention on peut citer des carbamates et benzimidazoles et notamment le carbendazime et un de ses précurseurs tel que le benomyl et le thiophanate méthyle ou encore le thiabendazole.

Comme matière active anti-*Rhizoctonia* B utilisable selon l'invention, on peul citer des dérivés aromatiques tels que le tolclofos-méthyl ou des anilides tels que le mépronil et le flutolanil, ou des phénylurées tel que le pencycuron ou des hydantoïnes telles que l'iprodione.

Comme matière active anti-*Pythium* C utilisable selon l'invention, on peut citer des phénylamides tels que le métalaxyl (acylalanine), des oxazolidinones telles que l'oxadixyl et des carbamates tels que le propamocarbe.

Comme insecticide D actif contre les insectes du sol utilisable selon l'invention (par exemple contre la mouche du haricot), on peut citer un composé organophosphoré par exemple le diclofenthion, le chlorpyrifos éthyl et le chlorpyrifos méthyl, un carbamate par exemple le furathiocarbe, un phénylpyrazole tel que le fipronil ou encore un pyréthrinoide tel que la téflutrine. On a en particulier observé que le diclofenthion donnait lieu avec l'association A+B+C à un effet de synergie fongicide.

Les compositions selon l'invention sont utilisables comme agents fongicides, contenant comme matière(s) active (s) les composés décrits précédemment, en mélange avec les supports solides ou liquides, acceptables en agriculture et les agents tensio-actifs également acceptables en agriculture. En particulier sont utilisables les supports inertes et usuels et les agents tensio-actifs usuels.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants. Plus généralement, les composés utilisés dans l'invention peuvent être combinés à tous les additifs solides ou liquides correspondant aux techniques habituelles de la mise en formulation.

D'une façon générale, les compositions selon l'invention contiennent habituellement de 0,05 à 95 % environ (en poids) d'un composé selon l'invention (appelé par la suite matière active), un ou plusieurs supports solides ou liquides et, éventuellement, un ou plusieurs agents tensioactifs.

Par le terme "support", dans le présent exposé, on désigne une matière organique ou minérale, naturelle ou synthétique, avec laquelle le composé est combiné pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, notamment le butanol etc...).

Comme adhésifs présents dans les formulations, on peut notamment citer les alcools polyvinyliques.

L'agent tensioactif peut être un agent émulsionnant, dispersant ou mouillant de type ionique ou non ionique ou un mélange de tels agents tensioactifs. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents. La présence d'au moins un agent tensioactif est généralement indispensable lorsque le composé et/ou le support inerte ne sont pas solubles dans l'eau et que l'agent vecteur de l'application est l'eau.

Ainsi donc, les compositions à usage agricole selon l'invention peuvent contenir les matières actives selon l'invention dans de très larges limites, allant de 0,05 % à 95 % (en poids). Leur teneur en agent tensio-actif est avantageusement comprise entre 5 % et 40 % en poids.

Ces compositions selon l'invention sont elles-mêmes sous des formes assez diverses, solides ou liquides.

Comme formes de compositions solides, on peut citer les poudres pour poudrage (à teneur en composé pouvant aller jusqu'à 100 %) et les granulés, notamment ceux obtenus par extrusion, par compactage, par imprégnation d'un support granulé, par granulation à partir d'une poudre (la teneur en composé dans ces granulés étant entre 0,5 et 80 % pour ces derniers cas), les comprimés ou tablettes effervescents.

Les composés de formule (I) peuvent encore être utilisés sous forme de poudres pour poudrage; on peut aussi utiliser une composition comprenant 50 g de matière active et 950 g de talc ; on peut aussi utiliser une composition comprenant 20 g de matière active, 10 g de silice finement divisée et 970 g de talc ; on mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes, les gels.

Les concentrés émulsionnables ou solubles comprennent le plus souvent 10 à 80 % de matière active, les émulsions ou solutions prêtes à l'application contenant, quant à elles, 0,001 à 20 % de matière active.

En plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précédemment cités.

A partir de ces concentrés, on peut obtenir par dilution avec de l'eau des émulsions de toute concentration désirée, qui conviennent particulièrement à l'application sur les cultures.

A titre d'exemple, voici la composition de quelques concentrés émulsionnables :

Exemple CE 1 :

- matière active        400 g/l
- dodécylbenzène sulfonate alcalin        24 g/l
- nonylphénol oxyéthylé à 10 molécules d'oxyde d'éthylène        16 g/l
- cyclohexanone        200 g/l
- solvant aromatique        q.s.p.1 litre

Selon une autre formule de concentré émulsionnable, on utilise :

3

Exemple CE 2 :

- matière active        250 g
- huile végétale époxydée        25 g
- mélange de sulfonate d'alkylaryle et d'éther de polyglycol et d'alcools gras        100 g
- diméthylformamide        50 g
- xylène        575 g

Les suspensions concentrées, également applicables en pulvérisation, sont préparées de manière à obtenir un produit fluide stable ne se déposant pas et elles contiennent habituellement de 10 à 75 % de matière active, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support, de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

A titre d'exemple, voici une composition de suspension concentrée :

Exemple SC 1 :

- matière active        500 g
- phosphate de tristyrylphénol polyéthoxylé        50 g
- alkylphénol polyéthoxylé        50 g
- polycarboxylate de sodium        20 g
- éthylène glycol        50 g
- huile organopolysiloxanique (antimousse)        1 g
- polysaccharide        1,5 g
- eau        316,5 g

Les poudres mouillables (ou poudre à pulvériser) sont habituellement préparées de manière qu'elles contiennent 20 à 95 % de matière active, et elles contiennent habituellement, en plus du support solide, de 0 à 30 % d'un agent mouillant, de 3 à 20 % d'un agent dispersant, et, quand c'est nécessaire, de 0,1 à 10 % d'un ou plusieurs stabilisants et/ou autres additifs, comme des agents de pénétration, des adhésifs, ou des agents antimottants, colorants, etc...

Pour obtenir les poudres à pulvériser ou poudres mouillables, on mélange intimement les matières actives dans les mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les feuilles des végétaux.

A la place des poudres mouillables, on peut réaliser des pâtes. Les conditions et modalités de réalisation et d'utilisation de ces pâtes sont semblables à celles des poudres mouillables ou poudres à pulvériser.

A titre d'exemple, voici diverses compositions de poudres mouillables (ou poudres à pulvériser) :

Exemple PM 1

- matière active        50 %
- alcool gras éthoxylé (agent mouillant)        2,5 %
- phényléthylphénol éthoxylé (agent dispersant)        5 %
- craie (support inerte)        42,5 %

Exemple PM 2 :

- matière active 10 %
- alcool synthétique oxo de type ramifié, en C13 éthoxylé par 8 à 10 oxyde d'éthylène (agent mouillant) 0,75 %
- lignosulfonate de calcium neutre (agent dispersant) 12 %
- carbonate de calcium (charge inerte)q.s.p. 100 %

Exemple PM 3 :

Cette poudre mouillable contient les mêmes ingrédients que dans l'exemple précédent, dans les proportions ci-après :

- matière active 75 %
- agent mouillant 1,50 %
- agent dispersant 8 %
- carbonate de calcium (charge inerte)q.s.p. 100 %

Exemple PM 4 :

- matière active 90 %
- alcool gras éthoxylé (agent mouillant) 4 %
- phényléthylphénol éthoxylé (agent dispersant) 6 %

Exemple PM 5 :

- matière active 50 %
- mélange de tensio-actifs anioniques et non ioniques (agent mouillant) 2,5 %
- lignosulfonate de sodium (agent dispersant) 5 %
- argile kaolinique (support inerte) 42,5 %

Les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Les composés selon l'invention peuvent être formulés sous la forme de granulés dispersibles dans l'eau également compris dans le cadre de l'invention.

Ces granulés dispersibles, de densité apparente généralement comprise entre environ 0,3 et 0,6 ont une dimension de particules généralement comprise entre environ 150 et 2000 et de préférence entre 300 et 1500 microns.

La teneur en matière active de ces granulés est généralement comprise entre environ 1 % et 90 %, et de préférence entre 25 % et 90 %.

Le reste du granulé est essentiellement composé d'une charge solide et éventuellement d'adjuvants tensio-actifs conférant au granulé des propriétés de dispersibilité dans l'eau. Ces granulés peuvent être essentiellement de deux types distincts selon que la charge retenue est soluble ou non dans l'eau. Lorsque la charge est hydrosoluble, elle peut être minérale ou, de préférence, organique. On a obtenu d'excellents résultats avec l'urée. Dans le cas d'une charge insoluble, celle-ci est de préférence minérale, comme par exemple le kaolin ou la bentonite. Elle est alors avantageusement accompagnée d'agents tensio-actifs (à raison de 2 à 20 % en poids du granulé) dont plus de la moitié est, par exemple, constituée par au moins un agent dispersant, essentiellement anionique, tel qu'un polynaphtalène sulfonate alcalin ou alcalino terreux ou un lignosulfonate alcalin ou alcalino-terreux, le reste étant constitué par des mouillants non ioniques ou anioniques tel qu'un alkyl naphtalène sulfonate alcalin ou alcalino-terreux.

Par ailleurs, bien que cela ne soit pas indispensable, on peut ajouter d'autres adjuvants tels que des agents anti-mousse.

Le granulé selon l'invention peut être préparé par mélange des ingrédients nécessaires puis granulation selon plusieurs techniques en soi connues (drageoir, lit fluide, atomiseur, extrusion, etc...). On termine généralement par un concassage suivi d'un tamisage à la dimension de particule choisie dans les limites mentionnées ci-dessus. On peut encore utilisé des granulés obtenus comme précédemment puis imprégnés avec une composition contenant la matière active.

De préférence, il est obtenu par extrusion, en opérant comme indiqué dans les exemples ci-après.

Exemple GD1 : Granulés dispersibles

Dans un mélangeur, on mélange 90 % en poids de matière active et 10 % d'urée en perles. Le mélange est ensuite broyé dans un broyeur à broches. On obtient une poudre que l'on humidifie avec environ 8 % en poids d'eau. La poudre humide est extrudée dans une extrudeuse à rouleau perforé. On obtient un granulé qui est séché, puis concassé et tamisé, de façon à ne garder respectivement que les granulés d'une dimension comprise entre 150 et 2000 microns.

Exemple GD2 : Granulés dispersibles

Dans un mélangeur, on mélange les constituants suivants :

- matière active          75 %
- agent mouillant (alkylnaphtalène sulfonate de sodium)          2 %
- agent dispersant (polynaphtalène sulfonate de sodium)          8 %
- charge inerte insoluble dans l'eau (kaolin)          15 %

Ce mélange est granulé en lit fluide, en présence d'eau, puis séché, concassé et tamisé de manière à obtenir des granulés de dimension comprise entre 0,15 et 0,80 mm.

Ces granulés peuvent être utilisés seuls, en solution ou dispersion dans de l'eau de manière à obtenir la dose cherchée. Ils peuvent aussi être utilisés pour préparer des associations avec d'autres matières actives, notamment fongicides, ces dernières étant sous la forme de poudres mouillables, ou de granulés ou suspensions aqueuses.

En ce qui concerne les compositions adaptées au stockage et au transport, elles contiennent plus avantageusement de 0,5 à 95 % (en poids) de substance active.

L'invention a également pour objet un procédé de protection des plantes contre les complexes parasitaires du sol, caractérisé en ce qu'on applique au lieu de culture, de préférence avant ou en même temps que la mise en place du matériel de propagation :

- au moins une matière active anti-*Fusarium* A, appliquée à une dose de 0,4 à 5g et de préférence de 0,4 à 2 g ma/kg de semences,
- au moins une matière active anti-*Rhizoctonia* B, appliquée à une dose de 0,25 à 3g et de préférence de 0,25 à 1 g ma/kg de semences
- au moins une matière active anti-*Pythium* C, appliquée à une dose de 0,25 à 10g et de préférence de 0,25 à 2g ma/kg de semences
- et au moins un insecticide D contre les insectes du sol.

D'une manière préférée l'association A+B+C+D est utilisée à une dose de 1 à 20 g et plus particulièrement de 3 à 10 g ma/kg de semences.

Selon une forme de réalisation du procédé, au moins deux des matières actives A, B, C et D sont appliquées simultanément.

Selon une autre forme de réalisation du procédé, au moins deux des matières actives A, B, C, et D sont appliquées successivement.

Par matériel de propagation on entend aussi bien les graines entières ou des parties de graines que des parties de plantes pour la reproduction végétative.

De manière parfaitement inattendue, la combinaison selon l'invention améliore alors de façon notable l'action des matières actives prises séparément pour un certain nombre de champignons particulièrement nuisibles pour les plantes notamment les cultures, en particulier les cultures légumières. Cette amélioration se traduit notamment par une diminution des doses de chacun des constituants, ce qui est particulièrement avantageux pour l'utilisateur et l'environnement. Le produit fongicide présente ainsi des propriétés synergiques attestées par l'application de la méthode de Limpel, LE., P.H, Schuldt et D.Lammont, 1962, Proc. NEWCC 16:48-53, en utilisant la formule suivante, encore appelée formule de Colby appliquée à un mélange ternaire :

$$E = \text{effet attendu} = X + Y + Z + \frac{(X.Y + YZ + ZX)}{100} + \frac{X.Y.Z}{10\,000}$$

dans laquelle :

- E est le pourcentage attendu de plantes aptes à reproduire par un mélange des trois fongicides A, B et C à des doses définies, respectivement égales à a et b,
- X est le pourcentage d'inhibition observé pour le fongicide A à la dose a,
- Y est le pourcentage d'inhibition observé pour le fongicide B à la dose b,
- Z est le pourcentage d'inhibition observé pour le fongicide C à la dose c.

Le pourcentage attendu de plantes aptes à reproduire est la différence de 100 moins le pourcentage de plantes présentant de nécroses profondes.

Quand le pourcentage observé du mélange est supérieur à E, il y a synergie.

L'exemple suivant illustre la synergie de l'association des matières actives fongicides selon l'invention.

Exemple 1 :

L'expérimentation est effectuée sur une sélection de souche de niveau d'activité reconnu isolées à partie de plantes attaquées de diverses régions françaises (Nord, Picardie, Sud ouest, Bretagne et région parisienne) comprenant *Fusarium solani, Fusarium oxysporum, Thielaviopsis basicola, Rhizoctonia solani et Pythium sp.*

Un substrat de terre franche est inoculé par les pathogènes et maintenu après semis de haricot (variété Capitole) (couverture de 1,5 cm) à 20°C, avec décomptes périodiques de peuplement puis finalement( au bout d'un nombre de jour indiqué ci-après) de la gravité d'infection. Les terrines comportent un quart d'ensemencement de semences non désinfectées, témoin de niveau d'attaque des parasites.

Des lots de 5 kg semences sont respectivement traités, séparément et en combinaison A+B+C et A+B+C+D avec :

- comme anti-Pythium : le métalaxyl (composé C) à la dose de 0,35 g ma/kg),
- comme anti-Fusarium et anti-Thielaviopsis : le thiophanate méthyl (composé A) à la dose de 0,45 g ma/kg,
- comme anti-Rhizoctonia : le tolclophos méthyl (composé B) à la dose de 0,25 g ma/kg et
- comme insecticide (composé D) le diclofenthion à la dose de 1,5 g ma/kg de semences.

La durée de chaque essai, c'est à dire le temps séparant l'observation de l'infestation est établie en fonction de la vitesse normale d'attaque de chaque parasite :

| Pathogènes | durée en jours |
|---|---|
| Fusarium solani + Fusarium oxysporum + Pythium | 21 |
| Fusarium + Rhizoctonia + Thielavopsis + Pythium | 33 |
| Tous pathogènes | 33 |

Dans ces conditions on obtient les résultats consignés dans le tableau ci-après.

| Pathogènes | C | A | B | C+A+B | | C+A+B+D | |
|---|---|---|---|---|---|---|---|
| | | | | Colby | mesuré | Colby | mesuré |
| Fus. oxysporum + Fus. solani + Pythium | 8 | 17,6 | 6,5 | 29,1 | 47,8 | 36,2 | 71,7 |
| Rhizoctonia solani + Pythium | 0 | 0 | 49,8 | 49,8 | 70,1 | 49,8 | 78,8 |
| Tous pathogènes | 0 | 0 | 1,1 | 1,1 | 19,3 | 1,1 | 31,1 |

Ces résultats montrent clairement la synergie des trois fongicides et de l'insecticide et l'excellent effet de protection des semences traitées selon l'invention.

L'insecticide D sous sa forme commerciale est associé à un fongicide à large spectre (le thiram). Cependant, la mesure des activités antipathogènes des 3 fongicides associés au thiram seul montre que le thiram ne peut expliquer l'effet synergique fongicide apporté par l'insecticide D.

Exemple 2 :

De la même façon que dans l'exemple 1, les combinaisons suivantes selon l'invention peuvent être utilisées :

| N° Combinaison | Composé A | Composé B | Composé C | Composé D |
|---|---|---|---|---|
| 1 | thiophanate méthyl | tolclophos méthyl | métalaxyl | chlorpyrifos éthyl |
| 2 | thiophanate méthyl | tolclophos méthyl | métalaxyl | chlorpyrifos méthyl |
| 3 | thiophanate méthyl | tolclophos méthyl | métalaxyl | furathiocarbe |
| 4 | benomyl | tolclophos méthyl | métalaxyl | dichiofenthion |
| 5 | thibendazole | tolclophos méthyl | métalaxyl | dichiofenthion |
| 6 | carbendazime | tolclophos méthyl | métalaxyl | dichiofenthion |
| 7 | thiophanate méthyl | mépronil | métalaxyl | dichiofenthion |
| 8 | thiophanate méthyl | flutolanil | métalaxyl | dichiofenthion |
| 9 | thiophanate méthyl | pencycuron | métalaxyl | dichiofenthion |
| 10 | thiophanate méthyl | iprodione | métalaxyl | dichiofenthion |
| 11 | thiophanate méthyl | tolclophos méthyl | oxadixyl | dichiofenthion |
| 12 | thiophanate méthyl | tolclophos méthyl | propanocar be | dichiofenthion |
| 13 | thiophanate méthyl | tolclophos méthyl | métalaxyl | dichiofenthion (+ thirame) |
| 14 | thiophanate méthyl | tolclophos méthyl | métalaxyl | chlorpyrifos éthyl |
| 15 | thiophanate méthyl | tolclophos méthyl | métalaxyl | furathiocarbe |
| 16 | thiophanate méthyl | tolclophos méthyl | métalaxyl | fipronil |
| 17 | thiophanate méthyl | tolclophos méthyl | métalaxyl | téfluthrine |
| 18 | thiophanate méthyl | tolclophos méthyl | oxadixyl | dichiofenthion (+ thirame) |
| 19 | thiophanate méthyl | tolclophos méthyl | oxadixyl | chlorpyrifos éthyl |
| 20 | thiophanate méthyl | tolclophos méthyl | oxadixyl | furathiocarbe |
| 21 | thiophanate méthyl | tolclophos méthyl | propamocar be | dichiofenthion (+ thirame) |
| 22 | thiophanate méthyl | mépronil | métalaxyl | dichiofenthion (+ thirame) |
| 23 | thiophanate méthyl | mépronil | métalaxyl | chlorpyrifos éthyl |
| 24 | thiophanate méthyl | mépronil | métalaxyl | furathiocarbe |
| 25 | thiophanate méthyl | mépronil | métalaxyl | fipronil |
| 26 | thiophanate méthyl | mépronil | métalaxyl | téfluthrine |
| 27 | thiophanate méthyl | mépronil | oxadixyl | dichiofenthion (+ thirame) |
| 28 | thiophanate méthyl | mépronil | oxadixyl | chlorpyrifos éthyl |
| 29 | thiophanate méthyl | mépronil | oxadixyl | furathiocarbe |
| 30 | thiophanate méthyl | mépronil | propamocar be | dichiofenthion (+ thirame) |
| 31 | benomyl | tolclophos méthyl | métalaxyl | dichiofenthion (+ thirame) |
| 32 | benomyl | tolclophos méthyl | métalaxyl | chlorpyrifos éthyl |
| 33 | carbendazime | tolclophos méthyl | métalaxyl | dichiofenthion (+ thirame) |
| 34 | carbendazime | tolclophos méthyl | métalaxyl | chlorpyrifos éthyl |
| 35 | thiophanate méthyl | flutolanil | métalaxyl | dichiofenthion (+ thirame) |
| 36 | thiophanate méthyl | flutolanil | métalaxyl | chlorpyrifos éthyl |

(suite)

| N° Combinaison | Composé A | Composé B | Composé C | Composé D |
|---|---|---|---|---|
| 37 | thiophanate méthyl | pencycuron | métalaxyl | dichiofenthion (+ thirame) |
| 38 | thiophanate méthyl | pencycuron | métalaxyl | chlorpyrifos éthyl |
| 39 | thiophanate méthyl | iprodione | métalaxyl | dichiofenthion (+ thirame) |
| 40 | thiophanate méthyl | iprodione | métalaxyl | chlorpyrifos éthyl |

Dans ce tableau, la formule (+ thirame) signifie que la présence de ce fongicide est facultative.

**Revendications**

1. Composition pour le traitement des cultures légumières contre les complexes parasitaires du sol, **caractérisée en ce qu'**elle comprend à la fois :

   - au moins une matière active anti-*Fusarium* (A), appliquée à une dose de 0,4 à 5 g et de préférence de 0,4 à 2 g ma/kg de semences,
   - au moins une matière active anti-*Rhizoctonia* (B), appliquée à une dose de 0,25 à 1 g ma/kg de semences,
   - au moins une matière active anti-*Pythium* (C), appliquée à une dose de 0,25 à 10 g et de préférence de 0,25 à 2 g ma/kg de semences et
   - au moins un insecticide (D) contre les insectes du sol,

2. Composition selon la revendication 1, **caractérisée en ce qu'**une matière active anti-*Fusarium* (A) est choisie dans le groupe comprenant les carbamates et les benzimidazoles.

3. Composition selon la revendication 2, **caractérisée en ce qu'**une matière active anti-*Fusarium* (A) est la carbendazime ou un de ses précurseurs.

4. Composition selon la revendication 2, **caractérisée en ce qu'**une matière active anti-*Fusarium* (A) est le thiophanate méthyle.

5. Composition selon l'une des revendications 1 à 4, **caractérisée en ce qu'**une matière active anti-*Rhizoctonia* (B) est choisie dans le groupe comprenant le toclofos-méthyl, des anilides, des phénylurées et des hydantoïnes.

6. Composition selon la revendication 5, **caractérisée en ce qu'**une matière active anti-*Rhizoctonia* (B) est le mépronil ou le flutolanil.

7. Composition selon la revendication 5, **caractérisée en ce qu'**une matière active anti-*Rhizoctonia* (B) est le pencycuron.

8. Composition selon la revendication 5, **caractérisée en ce qu'**une matière active anti-*Rhizoctonia* (B) est l'iprodione.

9. Composition selon l'une des revendications 1 à 8, **caractérisée en ce qu'**une matière active anti-*Pythium* (C) est choisie dans le groupe comprenant des phénylamides, des oxazolidinones et des carbamates.

10. Composition selon la revendication 9, **caractérisée en ce qu'**une matière active anti-*Pythium* (C) est le métalaxyl.

11. Composition selon la revendication 9, **caractérisée en ce qu'**une matière active anti-*Pythium* (C) est l'oxadixyl.

12. Composition selon la revendication 9, **caractérisée en ce qu'**une matière active anti-*Pythium* (C) est le propamocarbe.

13. Composition selon l'une des revendications 1 à 12, **caractérisée en ce qu'**un insecticide (D) contre les insectes du sol est choisi dans le groupe comprenant un composé organophosphoré, un carbamate, un phénylpyrazole et un pyréthrinoide.

**14.** Composition selon la revendication 13, **caractérisée en ce qu'**un insecticide (D) contre les insectes du sol est le diclofenthion.

**15.** Composition selon la revendication 13, **caractérisée en ce qu'**un insecticide (D) contre les insectes du sol est le chlorpyrifos éthyl ou le chlorpyrifos méthyl.

**16.** Composition selon la revendication 13, **caractérisée en ce qu'**un insecticide (D) contre les insectes du sol est le furathiocarbe.

**17.** Composition selon la revendication 13, **caractérisée en ce qu'**un insecticide (D) contre les insectes du sol est le fipronil.

**18.** Composition selon la revendication 13, **caractérisée en ce qu'**un insecticide (D) contre les insectes du sol est la téflutrine.

**19.** Procédé de protection des plantes contre les complexes parasitaires du sol **caractérisé en ce que** l'on applique au milieu de culture :

- au moins une matière active anti-*Fusarium* (A), appliquée à une dose de 0,4 à 5 g et de préférence de 0,4 à 2 g ma/kg de semences,
- au moins une matière active anti-*Rhizoctonia* (B), appliquée à une dose de 0,25 à 3 g et de préférence de 0,25 à 1 g ma/kg de semences,
- au moins une matière active anti-*Pythium* (C), appliquée à une dose de 0,25 à 10 g et de préférence de 0,25 à 2 g ma/kg de semences, et
- au moins un insecticide (D) contre les insectes du sol.

**20.** Procédé selon la revendication 19, **caractérisé en ce que** la dose desdites matières actives A+B+C+D, appliquée au lieu de culture est de 1 à 20g et de préférence de 3 à 10 g ma/kg de semences.

**Patentansprüche**

**1.** Zusammensetzung für die Behandlung von Gemüsekulturen gegen Parasitenkomplexe des Bodens, **dadurch gekennzeichnet, dass** sie gleichzeitig beinhaltet:

- mindestens einen aktiven Stoff anti-*Fusarium* (A), angewendet mit einer Dosis von 0,4 bis 5 g und bevorzugt von 0,4 bis 2 g ma/kg der Saat,
- mindestens einen aktiven Stoff anti-*Rhizoctonia* (B), angewendet mit einer Dosis von 0,25 bis 1 g der Saat,
- mindestens einen aktiven Stoff anti-Pythium (C), angewendet mit einer Dosis von 0,25 bis 10 g und bevorzugt von 0,25 bis 2 g ma/kg der Saat,
- mindestens ein Insektizid (D) gegen Bodeninsekten.

**2.** Zusammensetzung nach dem Anspruch 1, **dadurch gekennzeichnet, dass** ein aktiver Stoff anti-*Fusarium* (A) aus der Gruppe ausgewählt wird, welche die Carbamate und die Benzimidazole beinhaltet.

**3.** Zusammensetzung nach dem Anspruch 2, **dadurch gekennzeichnet, dass** ein aktiver Stoff anti-*Fusarium (A)* das Carbendazim oder einer seiner Vorstufen ist.

**4.** Zusammensetzung nach dem Anspruch 2, **dadurch gekennzeichnet, dass** ein aktiver Stoff anti-*Fusarium (A)* das Methylthiophanat ist.

**5.** Zusammensetzung nach einem der Ansprüche 1 bis 4, **dadurch gekennzeichnet, dass** ein aktiver Stoff anti-*Rhizoctonia* (B) aus der Gruppe ausgewählt wird, welche das Methyltoclofos, die Anilide, die Phenylcarbamide und die Hydantoine beinhaltet.

**6.** Zusammensetzung nach dem Anspruch 5, **dadurch gekennzeichnet, dass** ein aktiver Stoff anti-*Rhizoctonia* (B) das Mepronil oder das Flutolanil ist.

7.  Zusammensetzung nach dem Anspruch 5, **dadurch gekennzeichnet, dass** ein aktiver Stoff anti-*Rhizoctonia* (B) das Pencycuron ist.

8.  Zusammensetzung nach dem Anspruch 5, **dadurch gekennzeichnet, dass** ein aktiver Stoff anti-*Rhizoctonia* (B) das Iprodione ist.

9.  Zusammensetzung nach einem der Ansprüche 1 bis 8, **dadurch gekennzeichnet, dass** ein aktiver Stoff anti-*Pythium* (C) aus der Gruppe ausgewählt wird, welche die Phenylamide, die Oxazolidinone und die Carbamate beinhaltet.

10. Zusammensetzung nach dem Anspruch 9, **dadurch gekennzeichnet, dass** ein aktiver Stoff anti-*Pythium* (C) das Metalaxyl ist.

11. Zusammensetzung nach dem Anspruch 9, **dadurch gekennzeichnet, dass** ein aktiver Stoff anti-*Pythium* (C) das Oxadixyl ist.

12. Zusammensetzung nach dem Anspruch 9, **dadurch gekennzeichnet, dass** ein aktiver Stoff anti-*Pythium* (C) das Propamocarbe ist.

13. Zusammensetzung nach einem der Ansprüche 1 bis 12, **dadurch gekennzeichnet, dass** ein Insektizid (D) gegen Bodeninsekten aus der Gruppe ausgewählt wird, welche ein Organophosphat, ein Carbamat, ein Phenylpyrazol und ein Pyrethrinoid beinhaltet.

14. Zusammensetzung nach dem Anspruch 13, **dadurch gekennzeichnet, dass** ein Insektizid (D) gegen Bodeninsekten das Diclofenthion ist.

15. Zusammensetzung nach dem Anspruch 13, **dadurch gekennzeichnet, dass** ein Insektizid (D) gegen Bodeninsekten das Ethylchlorpyrifos oder das Methylchlorpyrifos ist.

16. Zusammensetzung nach dem Anspruch 13, **dadurch gekennzeichnet, dass** ein Insektizid (D) gegen Bodeninsekten das Furathiocarbe ist.

17. Zusammensetzung nach dem Anspruch 13, **dadurch gekennzeichnet, dass** ein Insektizid (D) gegen Bodeninsekten das Fipronil ist.

18. Zusammensetzung nach dem Anspruch 13, **dadurch gekennzeichnet, dass** ein Insektizid (D) gegen Bodeninsekten das Teflutrine ist.

19. Verfahren zum Schutz der Pflanzen gegen Parasitenkomplexe des Bodens, **dadurch gekennzeichnet, dass** man in der Mitte der Kultur anwendet:

    -   mindestens einen aktiven Stoff anti-*Fusarium* (A), angewendet mit einer Dosis von 0,4 bis 5 g und bevorzugt von 0,4 bis 2 g ma/kg der Saat,
    -   mindestens einen aktiven Stoff anti-*Rhizoctonia* (B), angewendet mit einer Dosis von 0,25 bis 3 g und bevorzugt von 0,25 bis 1 g ma/kg der Saat,
    -   mindestens einen aktiven Stoff anti-Pythium (C), angewendet mit einer Dosis von 0,25 bis 10 g und bevorzugt von 0,25 bis 2 g ma/kg der Saat,
    -   mindestens ein Insektizid (D) gegen Bodeninsekten.

20. Verfahren nach dem Anspruch 19, **dadurch gekennzeichnet, dass** die Dosis der besagten aktiven Stoffe A+B+C+D, welche auf die Kulturen angewendet werden, 1 bis 20 g und bevorzugt von 3 bis 10 g ma/kg der Saat ist.

**Claims**

1.  Composition for treating vegetable cultures against parasite complexes from the ground, **characterized in that** it comprises together:

- at least one anti-*Fusarium* active matter (A), applied at a dose from 0.4 to 5 g and preferably from 0.4 to 2 g a.m./kg of seeds,
- at least one anti-*Rhizoctonia* active matter (B), applied at a dose from 0.25 to 1 g a.m./kg of seeds,
- at least one anti-*Pythium* active matter (C), applied at a dose from 0.25 to 10 g and preferably from 0.25 to 2 g a.m./kg of seeds, and
- at least one insecticide (D) against ground insects.

2. The composition according to claim 1, **characterized in that** an anti-*Fusarium* active matter (A) is selected from the group comprising carbamates and benzimidazoles.

3. The composition according to claim 2, **characterized in that** an anti-*Fusarium* active matter (A) is carbendazime or one of it precursors.

4. The composition according to claim 2, **characterized in that** an anti-*Fusarium* active matter (A) is thiophanatemethyl.

5. The composition according to any of claims 1 to 4, **characterized in that** an anti-*Rhizoctonia* (B) active matter is selected from the group comprising to clofosmethyl, anilides, phenylureas, and hydantoins.

6. The composition according to claim 5, **characterized in that** an anti-*Rhizoctonia* active matter (B) is mepronil or flutolanil.

7. The composition according to claim 5, **characterized in that** an anti-*Rhizoctonia* active matter (B) is pencycuron.

8. The composition according to claim 5, **characterized in that** an anti-*Rhizoctonia* active matter (B) is iprodione.

9. The composition according to any of claims 1 to 8, **characterized in that** an anti-*Pythium* active matter (C) is selected from the group comprising phenylamides, oxazolidinones, and carbamates.

10. The composition according to claim 9, **characterized in that** an *anti-Pythium* active matter (C) is metalaxyl.

11. The composition according to claim 9, **characterized in that** an *anti-Pythium* active matter (C) is oxadixyl.

12. The composition according to claim 9, **characterized in that** an *anti-Pythium* active matter (C) is propanocarb.

13. The composition according to any of claims 1 to 12, **characterized in that** an insecticide (D) against ground insects is selected from the group comprising an organophosphorus compound, a carbamate, a phenylpyrazole and a pyrethrinoid.

14. The composition according to claim 13, **characterized in that** an insecticide (D) against ground insects is diclofenthion.

15. The composition according to claim 13, **characterized in that** an insecticide (D) against ground insects is chlorpyrifos-ethyl or chlorpyrifos-methyl.

16. The composition according to claim 13, **characterized in that** an insecticide (D) against ground insects is furathiocarb.

17. The composition according to claim 13, **characterized in that** an insecticide (D) against ground insects is fipronil.

18. The composition according to claim 13, **characterized in that** an insecticide (D) against ground insects is teflutrin.

19. A method for protecting plants against parasite complexes from the ground, **characterized in that**:

- at least one anti-*Fusarium* active matter (A), applied at a dose from 0.4 to 5 g and preferably from 0.4 to 2 g a.m./kg of seeds,

- at least one anti-*Rhizoctonia* active matter (B), applied at a dose from 0.25 to 3 g and preferably from 0.25 to 1 g a.m./kg of seeds,
- at least one anti-*Pythium* active matter (C), applied at a dose from 0.25 to 10 g and preferably from 0.25 to 2 g a.m./kg of seeds, and
- at least one insecticide (D) against ground insects

  are applied to the culture medium.

20. The method according to claim 19, **characterized in that** the dosage of said active matter A + B + C + D, applied to the culture locus is from 1 to 20 g and preferably from 3 to 10 g a.m./kg of seeds.